# EUROPÄISCHE PATENTSCHRIFT

(11) **EP 4 412 183 B1**
(45) Veröffentlichungstag und Bekanntmachung des Hinweises auf die Patenterteilung: **21.05.2025**
(21) Anmeldenummer: 24155905.3
(22) Anmeldetag: 06.02.2024
(51) Int. Cl.: H04L 67/12, H04L 43/50

(54) **VERFAHREN UND SYSTEM ZUM TRANSFORMIEREN AUFGEZEICHNETER KOMMUNIKATIONS-DATEN**
METHOD AND SYSTEM FOR TRANSFORMING RECORDED COMMUNICATION DATA
PROCÉDÉ ET SYSTÈME DE TRANSFORMATION DE DONNÉES DE COMMUNICATION ENREGISTRÉES

(30) Priorität: 06.02.2023 DE 102023102806
(43) Veröffentlichungstag der Anmeldung: 07.08.2024
(73) Patentinhaber: dSPACE GmbH, 33102 Paderborn (DE)
(72) Erfinder: Hötger, Martin, 33102 Paderborn (DE); Kalte, Heiko, 33102 Paderborn (DE); Seiler, Remigiusz, 33102 Paderborn (DE)

(56) Entgegenhaltungen:
- CN-A- 112 104 524
- ANONYMOUS, SPIE, PO BOX 10 BELLINGHAM WA 98227-0010 USA, 2009, XP040502038

## Beschreibung

Die Erfindung betrifft ein Testsystem und ein Verfahren zum Transformieren von aufgenommenen Kommunikations-Daten, wobei die Kommunikations-Daten durch Nachrichten aus einer Netzwerk- oder Buskommunikation gegeben sind, wobei die aufgenommene Kommunikation basierend auf einer ersten Kommunikationsmatrix durchgeführt wurde, wobei die aufgenommenen Kommunikations-Daten vorgesehen sind, mittels eines Testsystems an ein zu testendes Steuergerät versendet zu werden, wobei das Testsystem über eine erste Kommunikationsverbindung (z.B. CAN-, LIN- oder Ethernet-Verbindung) mit dem zu testenden Steuergerät verbunden ist, wobei das zu testende Steuergerät basierend auf einer zweiten Kommunikationsmatrix, insbesondere einer zweiten Version der Kommunikationsmatrix, konfiguriert ist.

Der Einzug von Advanced Driver Assistance Systems (ADAS) und Autonomous Driving (AD) Funktionen in heutige Fahrzeuge, wofür die Fahrzeug-Steuergeräte eine Fülle von Sensor-Daten zur Erfassung der Verkehrslage benötigen, welche z.B. mit im Fahrzeug verbauten Umgebungssensoren erhoben werden, erfordert immer neue Verfahren der Validierung dieser Steuergeräte und ganzer Systeme aus mehreren vernetzten Steuergeräten. Eine Möglichkeit die hohe (Test-)Komplexität zu adressieren ist, den Sensoren sowie dem Netzwerk der zu testenden Steuergeräte eine computergenerierte virtuelle Umgebung zu präsentieren (simulierte Straßen, Kreuzungen, Fahrzeuge, Fußgängern, Schilder usw., siehe z.B. https://web.archive.org/web/20220922052550/https://www.dspace.com/ en/pub/home/applicationfields/stories/faw-hongqi-is-it-okay-phvil.cfm

Eine rein virtuelle Absicherung ist jedoch in der Regel nicht ausreichend und muss mit real eingefahrenen Testkilometern untermauert werden. Hierzu wird das Fahrzeug in einem ersten Entwicklungsstand mit entsprechender Sensorik und den verschiedenen ECUs in realen Verkehrsszenarien bewegt und die relevanten Daten werden mit genauen Zeitstempeln aufgezeichnet (z.B. mithilfe des dSPACE AUTERA Systems, das sowohl als Data Logger als auch ggf. als Wiedergabevorrichtung für die aufgenommenen (geloggten) Daten dienen kann). Relevante Daten sind in diesem Zusammenhang sowohl die Sensor Rohdaten (z.B. Camera, Lidar, Radar) als auch die für ein Steuergerät als "Device under Test" (DuT) relevanten Kommunikations-Daten der Netzwerkkommunikation (z.B. CAN und Ethernet Trafik). Dieses "Einfahren" von Testdaten ist sehr aufwändig, kostenintensiv und quasi nicht vollständig reproduzierbar (z.B. aufgrund von geänderten Witterungsbedingungen). Eingefahrene Daten von Testkilometern stellen dadurch eine gewisse Investition und einen Wert für ein Unternehmen dar.

Die aufgenommenen Daten können im Labor, z.B. bei einem Hardware-in-the-Loop (HIL) Test oder einem Software-in-the-Loop (SIL) Test wieder verwendet werden, um neue Entwicklungsstände eines Steuergeräts oder eines Steuergeräte-Verbunds zu testen, ohne mit einem Fahrzeug erneut auf die Straße zu müssen. Hierzu müssen die Datenströme von Sensor-Daten und den Kommunikations-Daten aus der Bus- und/oder Netzwerkkommunikation wieder synchronisiert abgespielt werden können. Ein solches Verfahren wird Data Replay Test bezeichnet https://web.archive.org/web/20220922115142/https:// www.dspace.com/en/pub/home/applicationfields/foo/data_replay.cfm ). Gegebenenfalls sind beim Versenden der aufgenommenen Daten an das zu testende Steuergerät noch Zeitstempel, Zählerwerte und/oder Sicherheitscodierungen anzupassen, wie etwa in der WO2020/165067A1 oder der WO2022/013335A1 beschrieben.

Dokument CN 112104524 offenbart das Konvertieren von Fahrzeugnetzwerkerkennungskonfigurationsinformationen in einen entsprechenden Fahrzeugnetzwerkerkennungsknoten. Eine erste Erkennungskomponentenmatrixdarstellung wird erhalten, die dem Fahrzeugnetzwerkerkennungsknoten entspricht. Eine Erkennungsfrequenzbereichscharakteristikdarstellung und eine Zeitbereichscharakteristikdarstellung des Fahrzeugnetzwerkerkennungsknotens werden basierend auf der ersten Erkennungskomponentenmatrixdarstellung und einer Erkennungsabfragestrategie erhalten.

Das Steuergerät oder Steuergeräte-System muss zum Zeitpunkt des Einfahrens der Testdaten bereits einen gewissen Reifegrad haben, es unterliegt in der Regel aber trotzdem noch Änderungen aufgrund von Weiterentwicklung und Fehlerbehebung. Diese Änderungen müssen beim Abspielen der geloggten Daten berücksichtigt werden. Typische Veränderungen sind hierbei Änderungen in der sogenannten Kommunikationsmatrix. Die Kommunikationsmatrix definiert alle Kommunikationselemente wie z.B. Protocol Data Units (PDUs), Frames, Header und Nutzdaten mit darin enthaltenen Signalen etc. Sie bestimmt also den Aufbau der Nachrichten, aber auch die Topologie der Netzwerkteilnehmer und ggf. Sicherheitscodierungen. Sehr häufig werden die Elemente in der Kommunikationsmatrix gemäß dem AUTOSAR-Standard definiert.

Ein typisches Problem in diesem Zusammenhang ist beispielsweise, dass in einem neuen Entwicklungsstand mit einer neuen, zweiten Kommunikationsmatrix die Nutzdaten einer bestimmten CAN-Nachricht um ein zusätzliches Signal erweitert werden gegenüber der Spezifikation dieser CAN-Nachricht in der ersten Version der Kommunikationsmatrix, welche zum Zeitpunkt der Datenaufnahme noch aktuell war. Dies wiederum bedeutet, dass das mit der zweiten Kommunikationsmatrix konfigurierte zu testende Steuergerät mit diesem zusätzlichen Signal in der spezifizierten CAN-Nachricht rechnet, welches jedoch zum Zeitpunkt der Datenaufnahme noch nicht für diese Nachricht spezifiziert war und somit nicht in den aufgenommenen Kommunikations-Daten vorhanden ist. Die aufgenommenen Kommunikationsdaten sind somit für den Test des Steuergeräts nicht mehr ohne Änderungen verwendbar. Es müsste also eine neue Testfahrt für eine erneute Datenaufnahme oder eine virtuelle Testfahrt durchgeführt werden.

Vor diesem Hintergrund besteht die Aufgabe der Erfindung darin, ein Verfahren und ein Testsystem anzugeben, das den Stand der Technik weiterbildet.

Die Aufgabe wird gelöst durch ein mittels eines ersten Programms ausgeführtes Verfahren, wobei das Verfahren bevorzugt auf dem Testsystem oder einem geeigneten Rechner implementiert ist und die folgenden Verfahrensschritte umfasst:
a) Einlesen der ersten und der zweiten Kommunikationsmatrix,
b) Vergleichen der Elemente der Kommunikationsmatrizen durch
   i) Zuweisen von jeweils identischen oder korrespondierenden Elementen und
   ii) Kategorisieren von Änderungen der Elemente der zweiten Kommunikationsmatrix gegenüber den Elementen der ersten Kommunikationsmatrix,
c) Bestimmen der zu transformierenden Daten, wobei die zu transformierenden Daten durch diejenigen Kommunikations-Daten gegeben sind, welche einem Element der ersten Kommunikationsmatrix zuordenbar sind, welches mit einem Element der zweiten Kommunikationsmatrix korrespondiert, wobei das Element der zweiten Kommunikationsmatrix - insbesondere kategorisierte - Änderungen gegenüber dem korrespondierenden Element der ersten Kommunikationsmatrix aufweist,
d) Bearbeiten der Kommunikations-Daten durch
   i) Transformieren der bestimmten Daten gemäß vorgegebenen Vorschriften zu den kategorisierten Änderungen,
   ii) Verwerfen der aufgenommenen Kommunikations-Daten, welche einem Element der ersten Kommunikationsmatrix zuzuordnen sind, für welches kein identisches oder korrespondierendes Element in der zweiten Kommunikationsmatrix existiert,
e) Versenden der aufgenommenen und weder zu verwerfenden noch zu transformierenden Daten und Versenden der transformierten Daten an das zu testende Steuergerät oder Abspeichern der zu versendenden Daten in einer Datei.

Es ist unerheblich, in welcher Reihenfolge die erste und die zweite Kommunikationsmatrix in Schritt a) eingelesen werden. Für jedes Element der zweiten Kommunikationsmatrix - welche die aktuelle Kommunikationsmatrix für das zu testende Steuergerät ist - wird also beim Vergleich in Schritt b) überprüft, ob ein identisches Element in der ersten Kommunikationsmatrix - auf deren Basis die Kommunikations-Daten aufgenommen wurden - vorliegt. Ist dies der Fall, so können die entsprechenden aufgenommenen Nachrichten bei einem Replay Test des zu testenden Steuergeräts unverändert abgespielt werden, vorbehaltlich der oben genannten Anpassungen von Zeitstempeln, Zählerwerten und/oder Sicherheitscodierungen. Das Vorliegen eines identischen Elements in der ersten Kommunikationsmatrix wird von dem ersten Programm z.B. durch einen Link in eine Datenbank oder auf einen Speicher vermerkt. Dadurch werden die Elemente einander zugewiesen. Eine alternative Art der Zuweisung wäre zum Beispiel durch das Erstellen einer im Testsystem zu hinterlegenden Tabelle gegeben, mit jeweils einer Spalte für die Elemente jeder Kommunikationsmatrix, wobei identische Elemente der Kommunikationsmatrizen in derselben Reihe aufgeführt werden. Eine solche Tabelle ließe sich auch leicht auf weitere Kommunikationsmatrizen von späteren Entwicklungsständen erweitern.

Auch korrespondierende Elemente der beiden Kommunikationsmatrizen werden einander zugewiesen.

Als korrespondierende Elemente sind hier solche Elemente bezeichnet, bei denen das Element der zweiten Kommunikationsmatrix im Wesentlichen mit einem Element der ersten Kommunikationsmatrix übereinstimmt, sodass erkennbar ist, dass das Element der ersten Kommunikationsmatrix bis auf eine kategorisierte Änderung oder eventuell auch mehrere kategorisierte Änderungen mit dem Element der zweiten Kommunikationsmatrix identisch ist.

Kategorien von Änderungen sind dabei im ersten Programm bereits vorgegeben oder durch den Benutzer, z.B. über eine grafische Benutzerschnittstelle (GUI) angebbar.

In Schritt c) sind aus den aufgenommenen Kommunikations-Daten diejenigen Daten zu bestimmen, welche einem Element der ersten Kommunikationsmatrix zuordenbar sind, dem ein korrespondierendes Element der zweiten Kommunikationsmatrix zugewiesen wurde. Eine solche Bestimmung kann beispielsweise im Rahmen eines HIL- oder SIL-Tests erfolgen. Für solche Tests gibt es verschiedene Werkzeuge, welche die Möglichkeit der Dateninspektion auf dem Buskanal bzw. der Netzwerkverbindung, über welche die Daten zu dem Testsystem gelangen, bieten (z.B. https://vm-dshelp1.dspace.de/helpsetid=ConfigurationDeskBusManagerImplementation Guide&externalid=Topic_e2811b6d-f08a-4c30-92ef-a347d1c61bf6_-_&anchor=lguid-bb5fcacc-d09f-46f7-8157-3e00f347b5d2&Language=en-us&Release=RLS2022-A ). Hierfür ist auf dem Testsystem ein Programm zur Analyse der auf einer Bus- oder Netzwerkverbindung übertragenen Daten installiert. Dieses Programm kann beispielsweise durch das erste Programm aufgerufen und ausgeführt werden und die Zugehörigkeit einer Nachricht zu einem entsprechenden Element der ersten Kommunikationsmatrix ermitteln. Ein solches Programm kann aber auch auf einem gewöhnlichen PC implementiert sein und für eine Vorverarbeitung der Daten verwendet werden.

Ist ein Element der ersten Kommunikationsmatrix einem korrespondierenden Element der zweiten Kommunikationsmatrix zugewiesen, so sind die entsprechenden Daten der Nachricht als zu transformierende Daten bestimmt. Es sei angemerkt, dass es auch mehrere korrespondierende Elemente der ersten Kommunikationsmatrix zu einem Element der zweiten Kommunikationsmatrix geben kann, z.B. wenn die Signale aus zwei in der ersten Kommunikationsmatrix beschriebenen PDUs in der zweiten Kommunikationsmatrix in einer einzigen PDU zusammengefasst werden. Auch der umgekehrte Fall ist zu beachten.

Die in Schritt c) bestimmten Daten werden in Schritt d)i) so transformiert, dass sie anschließend dem korrespondierenden Element aus der zweiten Kommunikationsmatrix zuordenbar sind. Die Transformation erfolgt durch im ersten Programm oder vom Benutzer über eine GUI oder eine einzulesende Datei vorgegebene Transformationsvorschriften zu den jeweiligen kategorisierten Änderungen.

Aufgenommene Kommunikations-Daten, für die kein Bezug zu einem Element der zweiten, aktuellen Kommunikationsmatrix hergestellt werden kann, werden in Schritt d)ii) verworfen, d.h. für das weitere Verfahren nicht beachtet, da sie nicht benötigt werden.

Alle Kommunikations-Daten, die mit den Definitionen der zweiten Kommunikationsmatrix übereinstimmen, werden dann in Schritt e) in einem Replay Test an das zu testende Steuergerät gesendet oder aber zunächst in einer Datei abgespeichert. Die Datei kann dann in einem späteren Replay Test des zu testenden Steuergeräts als Datenquelle verwendet werden.

Ein Vorteil des erfindungsgemäßen Verfahrens ist es, dass aufgenommene Kommunikations-Daten auch bei einem Wechsel bzw. Änderungen der zugrunde liegenden Kommunikationsmatrix weiter verwendbar sind.

In einer bevorzugten Ausführungsform weist Schritt d) des Verfahrens einen weiteren Teil-Schritt auf:
d) iii) Simulieren entsprechender Nachrichten für die Elemente der zweiten Kommunikationsmatrix, für die kein korrespondierendes Element in der ersten Kommunikationsmatrix existiert, mittels Restbussimulation.

Die simulierten Daten werden an das zu testende Steuergerät versendet oder in der Datei abgespeichert.

Als Restbussimulation bezeichnet man insbesondere bei HIL- und SIL-Tests Simulationsprogramme, welche beim Test eines Steuergeräts, das in einem Verbund von Steuergeräten eingesetzt werden soll, diejenigen Nachrichten simulieren, die von dem zu testenden Steuergerät erwartet werden, wobei jedoch die Steuergeräte, welche die erwarteten Nachrichten verschicken sollten, noch nicht vorliegen (weder real noch virtuell). Eine solche Restbussimulation wird erfindungsgemäß in Schritt d)iii) für Nachrichten zu Elementen der zweiten Kommunikationsmatrix verwendet, die gegenüber der ersten Kommunikationsmatrix neu hinzugekommen sind.

Die Restbussimulation der Nachrichten zu den Elementen der zweiten Kommunikationsmatrix, die keine Entsprechung unter den Elementen der ersten Kommunikationsmatrix haben, kann während des HIL- oder SIL-Tests des zu testenden Steuergeräts durchgeführt werden. In diesem Fall kann das erfindungsgemäße Verfahren auch als ein Testverfahren angesehen werden. Alternativ werden diese Nachrichten vor dem Test generiert und für spätere Tests in einer Datei abgelegt, zusammen mit den transformierten Daten aus Schritt d)i) und den nicht verworfenen Daten, welche unbearbeitet weiterverwendet werden können.

Die Restbussimulation bietet somit die Möglichkeit einer Ergänzung der aufgenommenen Kommunikations-Daten. Diese zusätzlichen Nachrichten können auch vor der eigentlichen Testdurchführung schon erzeugt werden. Dadurch wird der Simulationsaufwand während des Tests verringert.

Die Durchführung von Schritt d)i), also das Transformieren der Kommunikations-Daten, kann auch mindestens teilweise mittels des Simulationsprogramms für die Restbussimulation erfolgen, indem dieses geeignet adaptiert oder erweitert wird.

Bevorzugt ist ein Element einer Kommunikationsmatrix durch die Definition oder auch Spezifikation einer PDU einer Nachricht (z.B. einer nach AUTOSAR definierten I-PDU für die Nutzdaten einer Nachricht mit den in ihnen enthaltenen Signalen) oder eines Frames (z.B. eines CAN Frames) einer Nachricht gegeben.

PDUs werden in einer Kommunikationsmatrix beispielsweise durch Angabe von IDs, ihres Kommunikationspfads, der in ihnen enthaltenen Signale und - im Falle von Service-basierter Kommunikation - durch Angabe der zu verwendenden Methoden definiert. Mit dem Kommunikationspfad sind hier Angaben zu sendendem und empfangendem Steuergerät bzw. empfangenden Steuergeräten sowie zu der verwendeten Kommunikationsverbindung (beispielsweise zum Port und/oder ggf. zur Kommunikationstechnologie wie CAN, LIN, etc.) gemeint. In der Regel wird für eine PDU auch ein Pfadname vergeben, der den Kommunikationspfad beschreibt.

Eine erste übergeordnete Änderungskategorie ist für eine Änderung bezüglich der PDU oder eine Änderung bezüglich des Frames gegeben, die nicht den Inhalt der PDU oder des Frames betrifft.

Diese erste Änderungskategorie kann Unterkategorien aufweisen. Beispielsweise kann eine Unterkategorie das Entfallen ganzer PDUs oder Frames umfassen, während eine andere Unterkategorie die Änderungen bezeichnet, die das Hinzufügen einer neuen PDU bzw. eines neuen Frames betreffen. Eine weitere Unterkategorie bezeichnet die Änderungen, die durch die Änderung eines Parameters für die PDU oder den Frame gegeben sind, etwa wenn sich der Port ändert, an dem die PDU bzw. der Frame empfangen werden soll.

Bevorzugt ist eine zweite übergeordnete Kategorie der Änderung durch eine Änderung der Nutzdaten und/oder Signale in den Nutzdaten der PDU bzw. des Frames gegeben, wobei Unterkategorien spezifizieren, ob z.B. einer PDU im Vergleich zur ersten Kommunikationsmatrix ein Signal hinzugefügt wurde oder ein Signal nun entfällt. Auch die Änderung der Signalcodierung ist eine mögliche Änderungskategorie.

Der Vorteil der Kategorisierung der Änderungen liegt darin, dass für die unterschiedlichen Kategorien unterschiedliche Handlungsanweisungen in dem ersten Programm hinterlegt werden oder für das erste Programm z.B. in einer einzulesenden Datei oder über eine Benutzerschnittstelle angegeben werden können. Gemäß dieser Handlungsanweisungen sind dann die aufgenommenen Kommunikations-Daten so zu transformieren, dass sie mit der zweiten Kommunikationsmatrix konform sind.

Denn wenn ein Element in der zweiten Kommunikationsmatrix Änderungen gegenüber einem korrespondierenden Element in der ersten Kommunikationsmatrix aufweist, sind diese Änderungen auch beim Versenden der aufgenommenen Daten an das mit der zweiten Kommunikationsmatrix konfigurierte zu testende Steuergerät zu beachten. Erfindungsgemäß werden die Kommunikations-Daten entsprechend transformiert, sodass sie von dem zu testenden Steuergerät als dem korrespondierenden Element der zweiten Kommunikationsmatrix zugehörig erkannt werden.

Dazu ist das Identifizieren der korrespondierenden Elemente der Kommunikationsmatrizen erforderlich.

In einer bevorzugten Ausführungsform erfolgt es durch einen Vergleich der Namen und/oder Pfadnamen der Elemente in der ersten Kommunikationsmatrix mit den Namen und/oder Pfadnamen der Elemente der zweiten Kommunikationsmatrix und/oder durch einen Vergleich der Identifikationsnummern (IDs) der jeweiligen Elemente.

Wenn beispielsweise die zweite Kommunikationsmatrix durch eine spätere Version der ersten Kommunikationsmatrix gegeben ist, so kann es sein, dass im Zuge der Weiterentwicklung des Steuergeräteverbunds eine oder mehrere Änderungen an einer Nachricht vorgenommen wurden und etwa ein Signal in die PDU einer Nachricht hinzugefügt wurde. Ist der in den Kommunikationsmatrizen angegebene Pfadname dieses Elements (der PDU) gleichgeblieben, aber es liegt eine Änderung in Form des hinzugefügten Signals vor, so ist mittels des ersten Programms algorithmisch erkennbar, dass es sich bei diesen Elementen der ersten und der zweiten Kommunikationsmatrix mit identischem Speicherpfad um korrespondierende Elemente handelt.

Beispielsweise wird also für ein erstes Element der zweiten Kommunikationsmatrix der Pfadname betrachtet und dann unter den Elementen der ersten Kommunikationsmatrix nach einem Element mit demselben Pfadnamen gesucht. Ist dieser gefunden, so wird überprüft, ob die Spezifikation der Elemente in beiden Kommunikationsmatrizen dieselbe ist. Weist die Spezifikation Änderungen auf, so sind diese bei der Wiedergabe der aufgenommenen Daten zu berücksichtigen und entsprechende Transformationen vorzunehmen.

Ist bekannt, dass für die gesamte Kommunikationsmatrix oder vielleicht nur in Bezug auf bestimmte darin beschriebene Cluster von Netzwerken oder Bussystemen eindeutige IDs vorliegen, so können auch diese IDs für einen Vergleich und das Identifizieren von korrespondierenden Elementen herangezogen werden.

Vorteilhaft ist diese Vorgehensweise besonders dann, wenn
die Kommunikationsmatrizen in einem der gängigen Austauschformate vorliegen (AR, DBC, LDF, FIBEX, ...), welche in der Regel ID-basierte Systeme zum eindeutigen Identifizieren der Elemente vorsehen.

In einer Ausführungsform der Erfindung werden die aufgenommenen und zu transformierenden Kommunikations-Daten aus einem Datenstrom ausgelesen, insbesondere nacheinander, und die Schritte c)-d)iii) während des laufenden Tests des zu testenden Steuergeräts ausgeführt. Es wird bei dieser Ausführungsform also keine Vorverarbeitung der aufgenommenen Daten benötigt. Sie können von ihrem Speicherort (z.B. auf einer Wiedergabevorrichtung wie etwa einem geeigneten PC odero ggf. einem AUTERA System der dSPACE GmbH) direkt an das Testsystem verschickt werden.

Insbesondere werden sie über eine zweite Kommunikationsverbindung dem Testsystem zur Verarbeitung der Kommunikations-Daten direkt zur Verfügung gestellt. Die zweite Kommunikationsverbindung kann dabei durch eine physikalische Kommunikationsverbindung gegeben sein, etwa eine Ethernet-Verbindung von einer Wiedergabevorrichtung zu dem Testsystem oder auch innerhalb des Testsystems. Alternativ kann die zweite Kommunikationsverbindung durch eine virtuelle Kommunikationsverbindung gegeben sein, d.h. einen virtuellen Datenbus innerhalb des Testsystems.

Bevorzugt werden das Transformieren der Daten, die Restbussimulation und die Manipulation der Nachrichten auf dem Testsystem mittels mindestens einer ersten Recheneinheit und einer zugeordneten Speichereinheit ausgeführt. Mit Recheneinheit ist hier bevorzugt eine geeignete Prozessoreinheit gemeint.

In einer alternativen Ausführungsform werden die Schritte a)-d) ii) vor der Testdurchführung ausgeführt und die aufgenommenen und transformierten Daten, welche zu Elementen der ersten Kommunikationsmatrix gehören, die ein identisches oder ein korrespondierendes Element aufweisen, werden in einer Datei (oder einem anderen zweckmäßigen Speicherort, Speichermedium, Speicherformat) gespeichert bzw. abgelegt und während eines Tests des zu testenden Steuergeräts aus der Datei o.ä. ausgelesen. Im Folgenden wird in diesem Zusammenhang verallgemeinernd der Begriff Datei verwendet.

Die Daten werden also schon vor der Testdurchführung, also vor dem Replay-Test, entsprechend der zweiten Kommunikationsmatrix bearbeitet. Diese Bearbeitung kann auch auf einem anderen Rechner durchgeführt werden, beispielsweise einem geeigneten PC, der mit entsprechenden Teilen des ersten Programms eingerichtet ist, aber nicht dauerhaft und zwingend Teil des Testsystems ist. Die Datei wird dem Testsystem dann für die Testdurchführung zur Verfügung gestellt, z.B. auf das Testsystem geladen oder aber die Datei mit den vorprozessierten Daten wird auf einer Wiedergabevorrichtung gespeichert, wo die Daten dann während des Tests des zu testenden Steuergeräts an das Testsystems ausgelesen und über die zweite Kommunikationsverbindung an das Testsystem versendet werden.

Vorteilhaft an dieser Ausführungsform ist, dass durch dieses Vorprozessieren der Rechenaufwand für die Testdurchführung vermindert wird.

In einer Ausführungsform werden in Schritt c) Nutzdaten von Nachrichten aus den Kommunikations-Daten ermittelt und die Signale in den Nutzdaten mit den Vorgaben für Signale durch die Elemente der zweiten Kommunikationsmatrix abgeglichen. Die Untersuchung wird bevorzugt von dem Testsystem mittels der oben erwähnten Dateninspektion durchgeführt, es sei denn, die Kommunikations-Daten werden aus einer Datei ausgelesen, dann kann die Untersuchung beispielsweise auch durch ein geeignetes weiteres Programm auf dem erwähnten geeigneten PC erfolgen.

Die Untersuchung der Nachrichten und der Nutzdateninhalte hat den Vorteil, dass auch Änderungen, welche die Inhalte der Kommunikationsdaten betreffen, ermittelt und kategorisiert werden und die aufgenommenen Kommunikation-Daten auch diesbezüglich an die zweite Kommunikationsmatrix angepasst werden können.

In einer weiteren Ausführungsform weist das Testsystem ein Gateway mit einer konfigurierbaren Filterfunktion auf, wobei Nachrichten, die über die zweite Kommunikationsverbindung an das Testsystem geschickt werden und keinem Element der zweiten Kommunikationsmatrix zuordenbar sind, mittels des Gateways gefiltert werden.

Beispielweise können Nachrichten mit einer ID, die zwar in der ersten Kommunikationsmatrix aufgeführt sind, aber keine Entsprechung in der zweiten Kommunikationsmatrix habe, schnell und effizient aus dem Datenstrom der aufgenommenen Daten herausgefiltert werden.

In einer weiteren Ausführungsform werden durch das Testsystem Werte in den Kommunikations-Daten direkt vor der Weitergabe an das zu testende Steuergerät über die erste Kommunikationsverbindung transformiert und/oder manipuliert.

Wenn beispielsweise ein Temperatur-Signal in der zweiten Kommunikationsmatrix in Celsius angegeben ist, während es in der ersten Kommunikationsmatrix in Fahrenheit spezifiziert war, erfolgt erfindungsgemäß eine entsprechende Wertetransformation in den Kommunikations-Daten. Eine Manipulation wird durchgeführt, wenn eine Vorgabe (z.B. eine Benutzereingabe über eine GUI) für eine willkürliche Veränderung oder ein Hinzufügen eines Wertes vorliegt, oder auch, wenn Sicherungsdaten auf Basis neuer Zeitstempel gesetzt oder korrigiert werden müssen. Eine Möglichkeit ist es, hierfür ein Manipulationsprogramm zu nutzen (https://vm-dshelp1.dspace.de/helpsetid=ConfigurationDeskBusManagerImpleme ntationGuide&externalid=Topic_e2811b6d-f08a-4c30-92ef-a347d1c61bf6_--_&anchor=lguid-0d493517-1b33-4cdb-9c58-f81078cc0790&Language=en-us&Release=RLS2022-A ) .

Eine Transformations- oder Manipulations-Funktionalität kann aber auch in ein Programm für die Restbussimulation integriert sein.

Eine solche Transformation oder Manipulation bietet weitere Möglichkeiten, die aufgenommenen Kommunikations-Daten an die zweiten Kommunikationsmatrix anzupassen oder zu Testzwecken zu ändern, um die Fehlererkennung des zu testenden Geräts zu erproben.

Bevorzugt ist die zweite Kommunikationsmatrix durch eine zweite Version der ersten Kommunikationsmatrix gegeben. In diesem Fall ist in der Regel das Identifizieren korrespondierender Elemente der Kommunikationsmatrizen erleichtert, besonders durch entsprechende Benutzerangaben zu vorgenommenen Änderungen.

In einer weiteren Ausführungsform wird zumindest der Teil des ersten Programms zum Transformatieren der aufgenommenen Kommunikations-Daten von einem zweiten Programm zur Generierung von Programmcode erzeugt und basierend auf dem Vergleich der Kommunikationsmatrizen und Benutzereingaben in optimierter Form generiert.

Dies hat den Vorteil, dass ein optimierter erster Programmcode erzeugt werden kann, der basierend auf dem Vergleich der

Kommunikationsmatrizen nur die konkret benötigten Änderungs-Kategorien und Transformations-Anweisungen umfasst. Das steigert die Effizienz des ersten Programms und ermöglicht genauere und effizientere Vorgaben für das Transformieren der Kommunikations-Daten. Besonders vorteilhaft ist das, wenn mehrere Sätze von Kommunikations-Daten aus mehreren Testfahrten basierend auf der ersten Kommunikationsmatrix aufgenommen wurden und entsprechend derselben zweiten Kommunikationsmatrix transformiert werden müssen.

Die Aufgabe wird auch gelöst durch ein Testsystem, das zur Durchführung des erfindungsgemäßen Verfahrens eingerichtet ist.

Die Erfindung wird nachfolgend unter Bezugnahme auf die Zeichnungen näher erläutert. Darin zeigt:
- Figur 1: eine schematische Ansicht der Testsituation bei verschiedenen Entwicklungsständen,
- Figur 2a: eine schematische Darstellung eines erfindungsgemäßen HIL-Tests unter Verwendung aufgenommener Kommunikations-Daten,
- Figur 2b: eine schematische Darstellung eines erfindungsgemäßen SIL-Tests unter Verwendung aufgenommener Kommunikations-Daten,
- Figur 3: ein Flussdiagramm zur Beschreibung des erfindungsgemäßen Verfahrensschritts b),
- Figur 4: eine schematische Darstellung eines Vergleichs von Elementen einer ersten und einer zweiten Kommunikationsmatrix,
- Figur 5: tabellarische Übersicht über eine mögliche Kategorisierung von Änderungen von Elementen einer Kommunikationsmatrix.

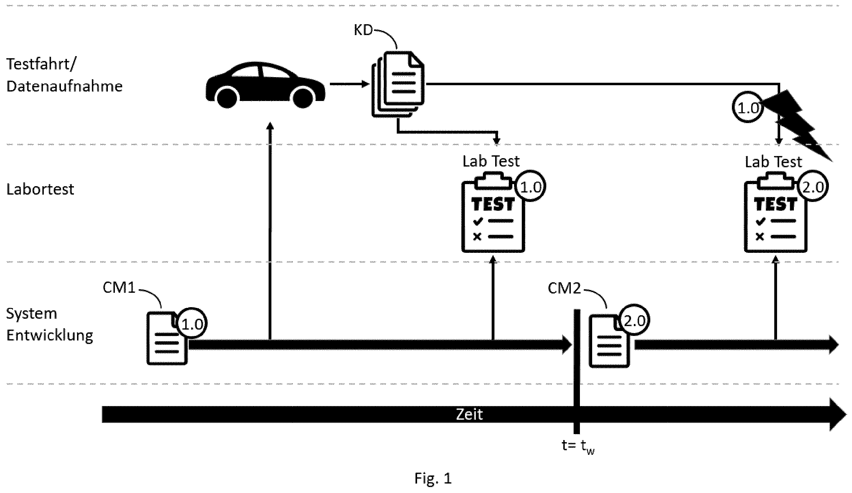

Die Abbildung der Figur 1 zeigt eine schematische Ansicht von Testsituationen bei verschiedenen Entwicklungsständen eines Fahrzeugs. Das Fahrzeug ist durch ein Auto symbolisiert. Die Systementwicklung schreitet mit der Zeit t voran. Die Steuergeräte und ihre Kommunikationsbeziehungen - z.B. welche Nachrichten mit welcher ID und welchen Signalen über welche Kommunikationsverbindung von einem ersten Steuergerät an ein zweites Steuergerät gesendet werden - sind stets in einer Kommunikationsmatrix beschrieben, auf deren Basis das Kommunikationssystem im Fahrzeug konfiguriert wird. Mit einem ersten Entwicklungsstand 1.0, zu welchem eine erste Kommunikationsmatrix CM1 aktuell ist, wird eine Testfahrt mit Datenaufnahme durchgeführt, um Kommunikations-Daten KD für einen Labortest Lab Test, insbesondere in Form eines HIL- oder eines SIL-Tests damit durchführen zu können. Ab einem späteren Zeitpunkt t=tw ist ein weiterer Entwicklungsstand 2.0 erreicht und die erste Kommunikationsmatrix CM1 wird durch eine zweite Kommunikationsmatrix CM2 aktualisiert. Aufgrund von Änderungen in den Elementen der zweiten Kommunikationsmatrix CM2 gegenüber den Elementen der ersten Kommunikationsmatrix CM1 können die aufgenommenen Kommunikations-Daten KD nicht mehr für einen Labortest Lab-Test verwendet werden, da die darin enthaltenen Nachrichten bei Änderungen nicht mehr als die in der aktuellen Kommunikationsmatrix definierten Nachrichten erkannt und von den Steuergeräten akzeptiert werden.

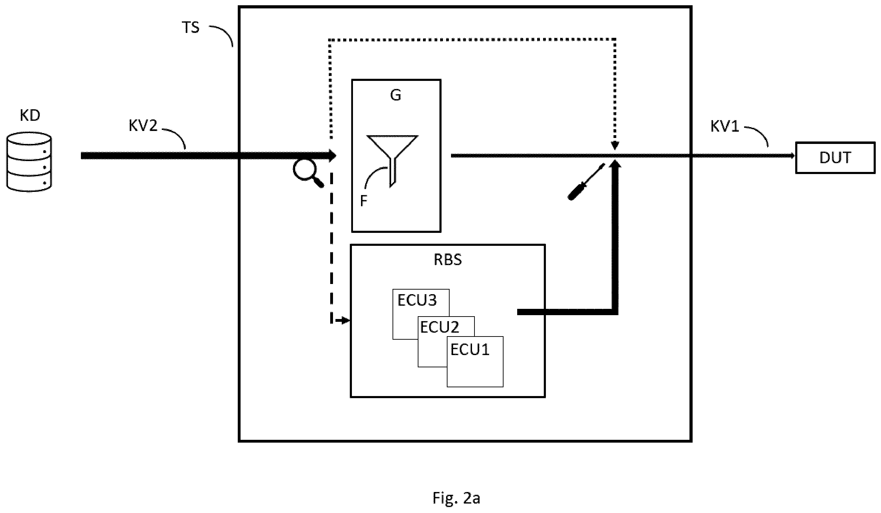

Figur 2a zeigt schematisch ein Testsystem TS für einen HIL-Test, welches über eine erste Kommunikationsverbindung KV1 mit einem zu testenden Steuergerät DUT verbunden ist. Die aufgenommenen Kommunikations-Daten KD werden dem Testsystem TS von einer hier nicht explizit dargestellten Wiedergabevorrichtung in Form von Nachrichten über eine zweite Kommunikationsverbindung KV2 zugeführt. Bei den Kommunikationsverbindungen KV1, KV2 kann es sich beispielsweise um Busverbindungen wie CAN oder LIN handeln oder aber auch um Netzwerkverbindungen wie z.B. (automotive) Ethernet-Verbindungen. Das Testsystem TS weist bei einem HIL Test, insbesondere für automotive Steuergeräte, ein echtzeitfähiges Rechnersystem auf und ist außerdem eingerichtet, die eingehenden Nachrichten zu untersuchen, d.h. eine Inspektion der Kommunikations-Daten KD durchzuführen. Dies ist in der Abbildung durch das Lupensymbol angedeutet. Bei dieser Untersuchung können Header und Nutzdaten der Nachrichten ausgelesen oder überprüft werden (z.B. auf die korrekte Länge). Die Kommunikations-Daten KD werden mittels einer nicht darstellten Recheneinheit des Testsystems TS Elementen der ersten Kommunikationsmatrix CM1 oder auch direkt Elementen der zweiten Kommunikationsmatrix CM2 zugeordnet und es wird bestimmt, ob ein Transformieren der Daten erforderlich ist. In der hier gezeigten Ausführungsform werden die Nachrichten einem Gateway G zugeleitet, welches eine Filterfunktion F aufweist, sodass Nachrichten, die einem Element der ersten Kommunikationsmatrix CM1 zuordenbar sind, für welches kein identisches oder korrespondierendes Element in der zweiten Kommunikationsmatrix CM2 existiert, direkt aussortiert werden.

Auf Nachrichten, deren Inhalte oder Frames einer Transformation zur Anpassung an die Elemente der zweiten Kommunikationsmatrix CM2 bedürfen, werden in der Recheneinheit des Testsystems TS entsprechende Algorithmen angewandt. Dazu werden ggf. die Nutzdaten mit den darin enthaltenen Signalen entpackt, entsprechend verarbeitet und anschließend wieder verpackt, um sie über die erste Kommunikationsverbindung KV1 an das zu testende Steuergerät DUT zu senden. Die separate Bearbeitung der reinen Nutzdaten bzw. Signale aus den Nachrichten ist durch den gepunkteten Pfeil angedeutet.

Ergibt die Untersuchung der Kommunikations-Daten KD, dass bestimmte Nachrichten ganz oder teilweise fehlen (z.B. fehlende Signale in Nutzdaten), so gehen entsprechende Befehle an eine zur Restbussimulation RBS vorgehaltene Einheit in dem Testsystem. Ggf. werden auch Nutzdaten und Signale (angedeutet durch den gestrichelten Pfeil) an die Restbussimulation RBS übergeben. Sind zum Beispiel zwei PDUs aus der ersten Kommunikationsmatrix CM1 in der zweiten Kommunikationsmatrix CM2 entfallen, ihre Signale nun jedoch in einer dritten "neuen" PDU in der zweiten Kommunikationsmatrix CM2 zusammengefasst, so werden die relevanten Inhalte der beiden PDUs aus der ersten Kommunikationsmatrix CM1 vor dem Gateway G durch die Daten-Inspektion ermittelt und als Eingabe an die Restbussimulation RBS übergeben, um die neue dritte PDU zu generieren.

Diese Einheit RBS kann auf der erwähnten Recheneinheit oder einer weiteren Recheneinheit implementiert sein. Bevorzugt gibt die Restbussimulation RBS vollständige, verpackte Nachrichten aus, die ohne weitere Verarbeitung auf die erste Kommunikationsverbindung KV1 gegeben werden können. Diese simulierten Nachrichten können dem zu testenden Steuergerät DUT Nachrichten von weiteren, nicht vorliegenden, aber gemäß der zweiten Kommunikationsmatrix CM2 erforderlichen Steuergeräten ECU1, ECU2 und ECU3 vortäuschen.

In Abbildung 2a ist zusätzlich durch einen symbolischen Schraubendreher angedeutet, dass das Testsystem TS auch eingerichtet ist, Nachrichten vor dem Versenden über die Kommunikationsverbindung KV1 an das zu testende Steuergerät DUT zu manipulieren. Mit Manipulieren ist hier gemeint, dass Werte aus den Nachrichten gezielt, insbesondere zu Testzwecken geändert werden. Beispielsweise kann ein Signalwert nach Vorgabe eines Nutzers willkürlich geändert werden oder aber eine zeitabhängige Verschlüsselung, wie etwa die oben erwähnten Sicherheitscodierungen, gemäß einem aktuellen Zählerwert angepasst werden. Aber auch Parameter der Nachricht können geändert werden, um zu testen, ob das Steuergerät DUT auf Fehler angemessen reagiert.

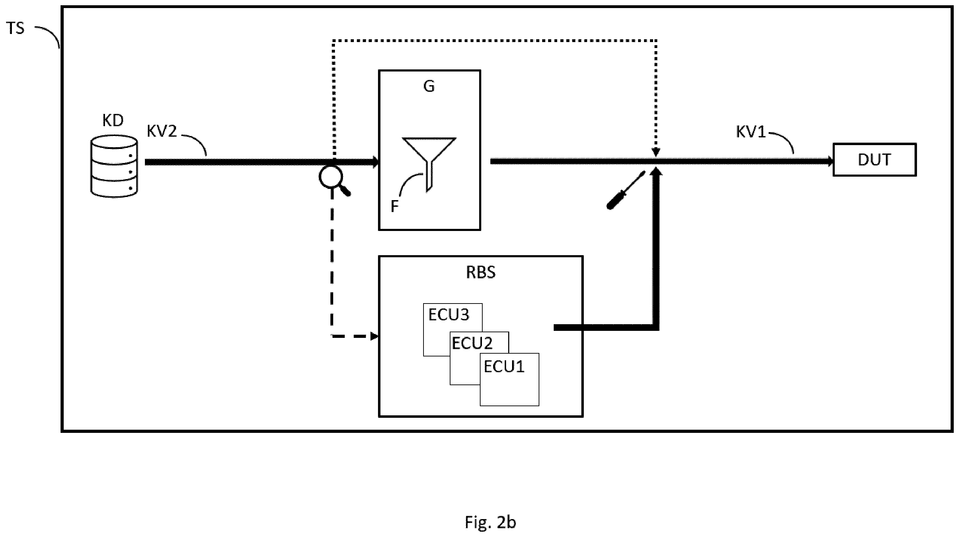

Figur 2b zeigt entsprechend ein Testsystem TS für einen SIL-Test zur Ausführung des erfindungsgemäßen Verfahrens. Im Gegensatz zum HIL-Test wird hier kein echtzeitfähiges Rechnersystem benötigt. Das zu testende Steuergerät DUT liegt in einer Software-Version vor und kann daher über eine virtuelle Kommunikationsverbindung KV1 an die Simulation angebunden sein. Das Testsystem TS ist in Figur 2b beispielsweise durch einen geeigneten PC gegeben, auf dem auch die aufgenommenen Kommunikations-Daten KD vorgehalten sind. Diese werden hier über eine virtuelle zweite Kommunikationsverbindung KV2 eingespielt. Die Untersuchung, das Filtern, das Transformieren der Kommunikations-Daten, die Restbussimulation und die Manipulation der Nachrichten und Kommunikations-Daten KD verläuft hier prinzipiell ebenso wie im zur Figur 2a beschriebenen Fall des HIL-Tests. Dabei haben gleiche Bezeichnungen auch die gleichen Funktionen wie dort beschrieben.

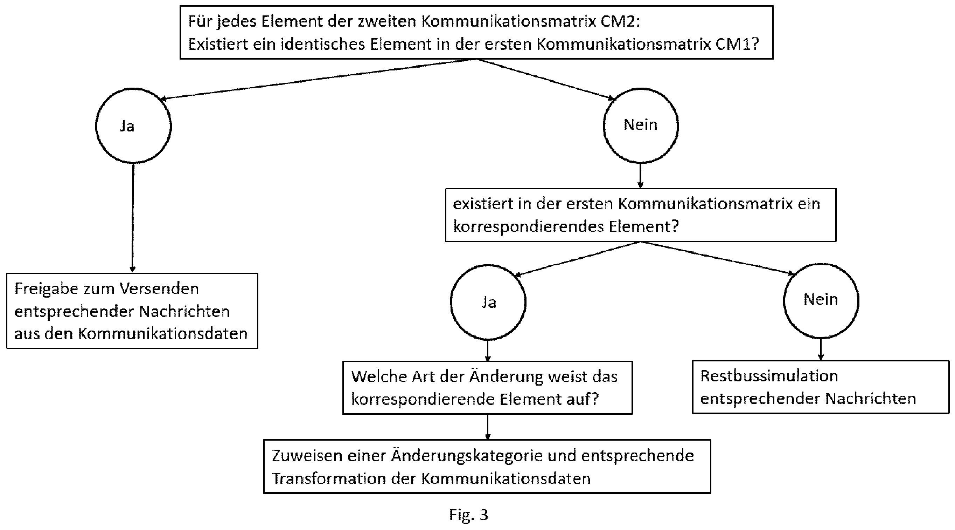

Figur 3 zeigt nun ein Flussdiagramm zum erfindungsgemäßen Ablauf des Verfahrensschritts b). Dabei wird für jedes Element der zweiten Kommunikationsmatrix CM2 überprüft, ob ein identisches Element in der ersten Kommunikationsmatrix CM1 existiert. Ist dies der Fall, so wird der Filter F des Testsystems TS so eingestellt, dass alle Nachrichten, die diesen Elementen der ersten Kommunikationsmatrix CM1 mit identischem Element in der zweiten Kommunikationsmatrix CM2 zuordenbar sind, vom Gateway G an das zu testende Steuergerät DUT durchgelassen werden.

Existiert kein identisches Element in der ersten Kommunikationsmatrix CM1, so wird überprüft, ob ein korrespondierendes Element in der ersten Kommunikationsmatrix CM1 vorliegt. Wenn beispielsweise ein Element in der ersten Kommunikationsmatrix CM1 denselben Pfadnamen hat, jedoch die Inhaltsbeschreibung für das Element Unterschiede aufweist, so wird in einer vorgegebenen Liste die Art des Unterschieds bzw. der Änderung gesucht und eine entsprechende Transformationsvorschrift entnommen. Es wird für alle Nachrichten, die dem entsprechenden Element der ersten Kommunikationsmatrix CM1 zuordenbar sind, die der Änderung entsprechende Transformationsvorschrift hinterlegt und durchgeführt.

Für alle Elemente der zweiten Kommunikationsmatrix CM2, für die kein identisches oder entsprechendes Element in der ersten Kommunikationsmatrix CM1 existiert, wird für die Testdurchführung eine Restbussimulation RBS von entsprechenden Nachrichten angelegt.

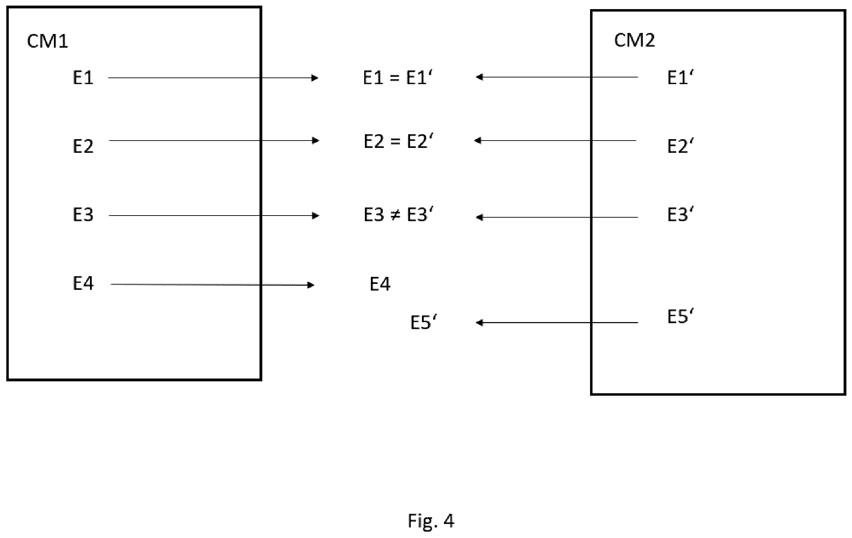

Der Vergleich der Elemente der Kommunikationsmatrizen CM1, CM2 wird auch in Figur 4 noch einmal schematisch verdeutlicht. Den Elementen E1', E2', E3', E5' der zweiten Kommunikationsmatrix CM2 werden jeweils die Elemente E1, E2, E3, E4 der ersten Kommunikationsmatrix CM1 gegenübergestellt. Für die ersten und zweiten Elemente E1 und E1 'sowie E2 und E2 'ist jeweils eine Identität festgestellt. E3 und E3' werden hier als korrespondierende Elemente identifiziert, z.B. aufgrund gleicher Pfadnamen, wobei die Prüfung der inhaltlichen Definition jedoch Änderungen in dem Element E3 'der zweiten Kommunikationsmatrix CM2 gegenüber dem Element E3 der ersten Kommunikationsmatrix CM1 ergibt. Für das Element E5 'wird bei dem Vergleich keine Entsprechung gefunden. Für Element E4 wird ggf. überprüft, ob es sich um ein korrespondierendes Element handeln könnte, wenn jedoch keine Vorgaben zu einer Änderung von E4 nach E5' dem System als kategorisierte Änderungen vorliegen, so sind Nachrichten aus den Kommunikations-Daten KD, die dem Element E4 zuzuordnen sind, für den Test zu verwerfen.

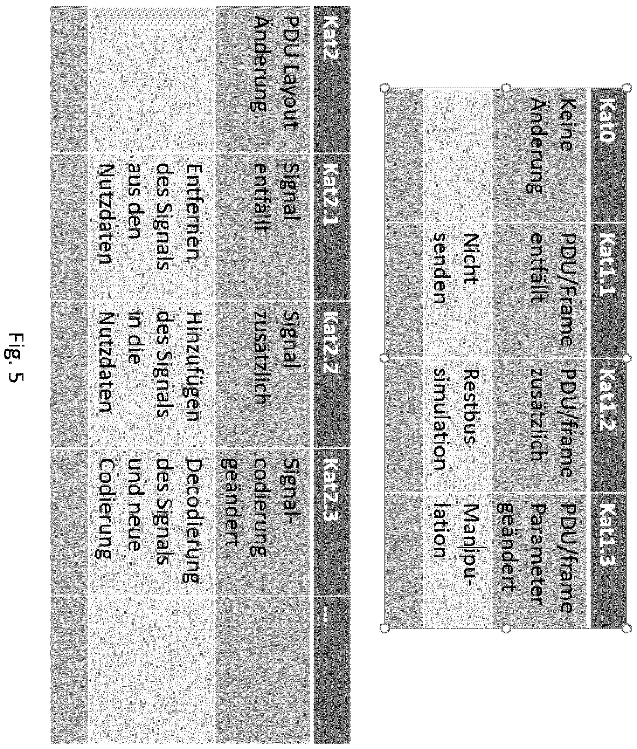

Figur 5 zeigt schematisch ein bespielhafte Liste mit kategorisierten Änderungen und entsprechenden Transformationsanweisungen.

Hier ist auch die Kategorie Kat0 für identische Elemente aufgenommen, für die keine Transformation benötigt wird. Kategorie Kat1 mit den Unterkategorien Kat1.1, Kat1.2 und Kat1.3 beschreibt die Änderungen, welche eine komplette PDU bzw. einen Frame betreffen. Hier stellen auch das Entfallen Kat1.1 oder das zusätzliche Auftreten Kat1.2 einer PDU oder eines Frames eine Änderung der Elemente der zweiten Kommunikationsmatrix CM2 gegenüber den Elementen der ersten Kommunikationsmatrix CM1 dar. Die Transformationsanweisung im Fall der Kategorie Kat1.1 lautet "nicht senden" der entsprechenden aufgenommenen Nachrichten, sodass diese Nachrichten nicht an das zu testende Steuergerät DUT weitergeleitet werden.

Die Transformationsanweisung im Fall der Kategorie Kat1.2 lautet "Restbussimulation", sodass die Restbussimulation RBS eingerichtet wird, während des Steuergerätetest entsprechende Nachrichten zu simulieren, da diese nicht in den aufgenommenen Kommunikations-Daten vorhanden sind.

Die Kategorie Kat1.3 beschreibt den Fall, dass ein Parameter einer PDU oder eines Frames geändert wurde, beispielsweise der Parameter für die Länge der Nutzlast. Die Transformationsanweisung lautet in diesem Fall, bei jeder Nachricht, die dem korrespondierenden Element der ersten Kommunikationsmatrix CM1 zuzuordnen ist, diesen Parameter während des Tests z.B. mittels des Manipulationswerkzeugs entsprechend zu ändern.

Die Änderungskategorie Kat2 betrifft hier Layout Änderungen einer PDU, d.h. beispielsweise, dass sich Vorgaben für die Signale, die in der Nutzlast einer PDU transportiert werden, geändert haben. In Figur 5 sind die Möglichkeiten aufgeführt, dass bei Kategorie Kat2.1 ein Signal entfällt, bei Kategorie Kat2.2 ein Signal hinzugefügt wurde oder bei Kategorie Kat2.3 sich die Codierung für ein Signal geändert hat. Weitere Kategorien sind denkbar, wie durch die drei Punkte in der folgenden Spalte angedeutet ist.

Auch ist es möglich, dass mehrere Kategorien von Änderungen für ein Paar von korrespondierenden Elementen E3, E3 'zu beachten ist. Beispielsweise kann die Änderung des Parameters für die Länge der Nutzlast nach Kategorie Kat1.3 auch mit einer Layout-Änderung verbunden sein, wenn bei einer längeren Nutzlast ein weiteres Signal hinzukommt, wie in Kategorie Kat2.2 beschrieben.

Es ist für die Erfindung nicht erforderlich, dass zwingend alle Änderungen erfasst und kategorisiert werden. Allein die automatische Anpassung von aufgenommenen Kommunikations-Daten KD durch bestimmte vorgegebene Änderungen kann einen großen Vorteil darstellen und ggf. ermöglichen, dass die aufgenommenen Daten auch für spätere Entwicklungsstände noch verwendet werden können.

## Patentansprüche

1. Verfahren zum Transformieren von aufgenommenen Kommunikations-Daten (KD) mittels eines ersten Programms, wobei die Kommunikations-Daten (KD) durch Nachrichten aus einer Netzwerk- oder Buskommunikation gegeben sind, wobei die aufgenommene Kommunikation basierend auf einer ersten Kommunikationsmatrix (CM1) durchgeführt wurde, wobei die aufgenommenen Kommunikations-Daten (KD) vorgesehen sind, mittels eines Testsystems (TS) an ein zu testendes Steuergerät (DUT) versendet zu werden, wobei das Testsystem (TS) über eine erste Kommunikationsverbindung (KV1) mit dem zu testenden Steuergerät (DUT) verbunden ist, wobei das zu testende Steuergerät (DUT) basierend auf einer zweiten Kommunikationsmatrix (CM2) konfiguriert ist, wobei das Verfahren die folgenden Verfahrensschritte umfasst:
a) Einlesen der ersten und der zweiten Kommunikationsmatrix (CM1, CM2),
b) Vergleichen der Elemente (E1, E2, E3, E4, E1', E2', E3', E5') der Kommunikationsmatrizen (CM1, CM2) durch
i) Zuweisen von jeweils identischen oder korrespondierenden Elementen (E1, E2, E3, E1', E2', E3') und
ii) Kategorisieren von Änderungen der Elemente (E1', E2', E3', E5') der zweiten Kommunikationsmatrix (CM2) gegenüber den Elementen (E1, E2, E3, E4) der ersten Kommunikationsmatrix (CM1),
c) Bestimmen der zu transformierenden Daten, wobei die zu transformierenden Daten durch diejenigen Kommunikations-Daten (KD) gegeben sind, welche einem Element (E3) der ersten Kommunikationsmatrix (CM1) zuordenbar sind, welches mit einem Element (E3 ') der zweiten Kommunikationsmatrix (CM2) korrespondiert, wobei das Element (E3 ') der zweiten Kommunikationsmatrix (CM2) kategorisierte Änderungen (Kat1.3, Kat2.1, Kat2.2, Kat2.3) gegenüber dem korrespondierenden Element (E3) der ersten Kommunikationsmatrix (CM1) aufweist,
d) Bearbeiten der Kommunikations-Daten (KD) durch
i) Transformieren der bestimmten Daten gemäß vorgegebenen Vorschriften zu den kategorisierten Änderungen (Kat0, Kat1.1, Kat1.2, Kat1.3, Kat2.1, Kat2.2, Kat2.3),
ii) Verwerfen der aufgenommenen Kommunikations-Daten (KD), welche einem Element (E4) der ersten Kommunikationsmatrix (CM1) zuzuordnen sind, für welches kein identisches oder korrespondierendes Element in der zweiten Kommunikationsmatrix (CM2) existiert,
e) Versenden der aufgenommenen und weder zu verwerfenden noch zu transformierenden Daten und Versenden der transformierten Daten an das zu testende Steuergerät (DUT) oder Abspeichern der zu versendenden Daten in einer Datei.

2. Verfahren nach Anspruch 1, wobei Schritt d) des Verfahrens einen weiteren Teil-Schritt aufweist:
d) iii) Simulieren entsprechender Nachrichten für die Elemente (E5') der zweiten Kommunikationsmatrix (CM2), für die kein korrespondierendes Element in der ersten Kommunikationsmatrix (CM1) existiert, mittels Restbussimulation (RBS),
und wobei die simulierten Daten an das zu testende Steuergerät (DUT) versendet oder in der Datei abgespeichert werden.

3. Verfahren nach einem der Ansprüche 1 oder 2, wobei ein Element (E1, E2, E3, E4, E1', E2', E3', E5') einer Kommunikationsmatrix (CM1, CM2) durch die Definition einer PDU oder eines Frames einer Nachricht gegeben ist und wobei eine erste Kategorie (Kat1.1, Kat1.2, Kat1.3) für die Änderung bezüglich der PDU oder die Änderung bezüglich des Frames gegeben ist und wobei eine zweite Kategorie der Änderung (Kat2, Kat2.1, Kat2.2, Kat2.3) durch eine Änderung der Nutzdaten und/oder Signale in den Nutzdaten der PDU bzw. des Frames gegeben ist.

4. Verfahren nach einem der vorherigen Ansprüche, wobei das Identifizieren der korrespondierenden Elemente (E3, E3') der Kommunikationsmatrizen durch (CM1, CM2) einen Vergleich der Namen und/oder Pfadnamen der Elemente (E1, E2, E3, E4) in der ersten Kommunikationsmatrix (CM1) mit den Namen und/oder Pfadnamen der Elemente (E1', E2', E3', E5') in der zweiten Kommunikationsmatrix (CM2) erfolgt und/oder durch einen Vergleich der IDs der jeweiligen Elemente (E1, E2, E3, E4, E1', E2', E3', E5').

5. Verfahren nach einem der vorherigen Ansprüche, wobei die aufgenommenen und zu konvertierenden Kommunikations-Daten (KD) aus einem Datenstrom ausgelesen werden, insbesondere nacheinander, und die Schritte c)-e) während des laufenden Tests des zu testenden Steuergeräts (DUT) ausgeführt werden, wobei der Datenstrom über eine zweite Kommunikationsverbindung (KV2) dem Testsystem (TS) zur Verarbeitung der Kommunikations-Daten (KD) zur Verfügung gestellt wird, wobei die zweite Kommunikationsverbindung (KV2) durch eine physikalische oder durch eine virtuelle Kommunikationsverbindung gegeben ist.

6. Verfahren nach einem der Ansprüche 2 bis 5, wobei das Transformieren der Kommunikations-Daten (KD), die Restbussimulation (RBS) und die Manipulation der Nachrichten auf dem Testsystem (TS) mittels mindestens einer ersten Recheneinheit und einer zugeordneten Speichereinheit ausgeführt werden.

7. Verfahren nach einem der Ansprüche 1 bis 4, wobei mindestens die Schritte a)-d) ii) vor der Testdurchführung ausgeführt werden und die aufgenommenen und transformierten Kommunikations-Daten in der Datei gespeichert werden und während eines Tests des zu testenden Steuergeräts (DUT) aus der Datei ausgelesen werden.

8. Verfahren nach einem der vorhergehenden Ansprüche, wobei in Schritt c) Nutzdaten von Nachrichten aus den Kommunikations-Daten (KD) ermittelt werden und Signale in den Nutzdaten mit den Vorgaben für Signale durch die Elemente (E1 ', E2 ', E3', E5') der zweiten Kommunikationsmatrix (CM2) abgeglichen werden.

9. Verfahren nach Anspruch 5, wobei das Testsystem (TS) ein Gateway (G) mit einer konfigurierbaren Filterfunktion (F) aufweist und wobei Nachrichten, die über die zweite Kommunikationsverbindung (KV2) an das Testsystem (TS) geschickt werden und keinem Element (E1 ', E2', E3', E5') der zweiten Kommunikationsmatrix (CM2) zuordenbar sind, mittels des Gateways (G) gefiltert werden.

10. Verfahren nach einem der vorhergehenden Ansprüche, wobei in dem Testsystem (TS), vor der Weitergabe an das zu testende Steuergerät (DUT) über die erste Kommunikationsverbindung (KV1), Werte in den Kommunikations-Daten transformiert und/oder manipuliert werden.

11. Verfahren nach einem der vorstehenden Ansprüche, wobei die zweite Kommunikationsmatrix (KM2) durch eine zweite Version (2.0) der ersten Kommunikationsmatrix (KM1) gegeben ist.

12. Verfahren nach einem der vorstehenden Ansprüche, wobei zumindest ein Teil des ersten Programms zum Transformieren der Kommunikations-Daten (KD) von einem zweiten Programm zur Generierung von Programmcode basierend auf dem Vergleich der Kommunikationsmatrizen (CM1, CM2) und Benutzereingaben in optimierter Form generiert wird.

13. Testsystem (TS), wobei das Testsystem (TS) eingerichtet ist, das Verfahren nach einem der Ansprüche 1 bis 12 auszuführen.

## Claims

1. A method for transforming recorded communication data (KD) by means of a first program, the communication data (KD) being given by messages from a network or bus communication, the recorded communication having been carried out on the basis of a first communication matrix (CM1), the recorded communication data (KD) being intended to be sent to a control device under test (DUT) by means of a test system (TS), the test system (TS) being connected to the control device under test (DUT) via a first communication link (KV1), the control device under test (DUT) being configured based on a second communication matrix (CM2), the method comprising the following method steps:
a) reading in the first and second communication matrix (CM1, CM2),
b) comparing the elements (E1, E2, E3, E4, E1', E2', E3', E5') of the communication matrices (CM1, CM2) by
i) assigning identical or corresponding elements (E1, E2, E3, E1', E2', E3') in each case, and
ii) categorizing changes in the elements (E1', E2', E3', E5') of the second communication matrix (CM2) relative to the elements (E1, E2, E3, E4) of the first communication matrix (CM1),
c) determining the data to be transformed, the data to be transformed being given by such communication data (KD) able to be associated with an element (E3) of the first communication matrix (CM1) corresponding to an element (E3') of the second communication matrix (CM2), the element (E3') of the second communication matrix (CM2) comprising categorized changes (Kat1.3, Kat2.1, Kat2.2, Kat2.3) with respect to the corresponding element (E3) of the first communication matrix (CM1),
d) editing the communication data (KD) by
i) transforming the particular data according to specified rules for the categorized changes (Kat0, Kat1.1, Kat1.2, Kat1.3, Kat2.1, Kat2.2, Kat2.3),
ii) discarding the recorded communication data (KD) to be associated with an element (E4) of the first communication matrix (CM1) for which no identical or corresponding element exists in the second communication matrix (CM2),
e) sending the recorded data neither to be discarded nor transformed and sending the transformed data to the control device under test (DUT) or saving the data to be sent in a file.

2. The method according to claim 1, wherein step d) of the method comprises a further sub-step:
d) iii) simulating corresponding messages for the elements (E5') of the second communication matrix (CM2) for which no corresponding element exists in the first communication matrix (CM1) by means of residual bus simulation (RBS),
and wherein the simulated data is sent to the control device under test (DUT) or saved in the file.

3. The method according to any one of claims 1 or 2, wherein an element (E1, E2, E3, E4, E1', E2', E3', E5') of a communication matrix (CM1, CM 2) is given by the definition of a PDU or a frame of a message and wherein a first category (Kat1.1, Kat1.2, Kat1.3) for the change with respect to the PDU or the change with respect to the frame is given and wherein a second category of the change (Kat2, Kat2.1, Kat2.2, Kat2.3) is given by a change of the user data and/or signals in the user data of the PDU or the frame, respectively

4. The method according to any one of the preceding claims, **characterized in that**
the corresponding elements (E3, E3') of the communication matrices are identified by (CM1, CM 2) comparing the names and/or path names of the elements (E1, E2, E3, E4) in the first communication matrix (CM1) with the names and/or path names of the elements (E1', E2', E3', E5') in the second communication matrix (CM2) and/or by comparing the IDs of the respective elements (E1, E2, E3, E4, E1', E2', E3', E5').

5. The method according to any one of the preceding claims, wherein the recorded communication data (KD) to be converted is read out from a data stream, in particular one after the other, and steps c)-e) are carried out during the ongoing test of the control unit under test (DUT), wherein the data stream is made available to the test system (TS) via a second communication link (KV2) for processing the communication data (KD), wherein the second communication link (KV2) is given by a physical or by a virtual communication link.

6. The method according to any one of claims 2 to 5, wherein the transforming of the communication data (KD), the residual bus simulation (RBS), and the manipulation of the messages are carried out on the test system (TS) by means of at least one first computing unit and an associated memory unit.

7. The method according to any one of claims 1 to 4, wherein at least steps a)-d) ii) are carried out before the test is performed and the recorded and transformed communication data is stored in the file and read out from the file during a test of the control device to be tested (DUT).

8. The method according to any one of the preceding claims, wherein in step c) user data of messages are determined from the communication data (KD) and signals in the user data are compared with the specifications for signals by the elements (E1', E2', E3', E5') of the second communication matrix (CM2).

9. The method according to claim 5, wherein the test system (TS) comprises a gateway (G) having a configurable filter function (F) and wherein messages sent to the test system (TS) via the second communication link (KV2) and unable to be associated with any element (E1', E2', E3', E5') of the second communication matrix (CM2) are filtered by means of the gateway (G).

10. The method according to any one of the preceding claims, wherein values in the communication data are transformed and/or manipulated in the test system (TS) before being passed on to the control device under test (DUT) via the first communication link (KV1).

11. The method according to any one of the preceding claims, wherein the second communication matrix (KM2) is given by a second version (2.0) of the first communication matrix (KM1).

12. The method according to any one of the preceding claims, wherein at least a part of the first program for transforming the communication data (KD) is generated by a second program for generating program code based on the comparison of the communication matrices (CM1, CM2) and user inputs in an optimized form.

13. A test system (TS), wherein the test system (TS) is configured for performing a method according to any one of the claims 1 through 12.

## Revendications

1. Procédé de transformation de données de communication enregistrées (KD) au moyen d'un premier programme, les données de communication (KD) étant données par des messages provenant d'une communication par réseau ou par bus, la communication enregistrée ayant été effectuée sur la base d'une première matrice de communication (CM1), les données de communication enregistrées (KD) étant prévues pour être envoyées au moyen d'un système de test (TS) à un dispositif de commande à tester (DUT), le système de test (TS) étant connecté au dispositif de commande à tester (DUT) via une première liaison de communication (KV1), le dispositif de commande à tester (DUT) étant configuré sur la base d'une deuxième matrice de communication (CM2), le procédé comprenant les étapes de procédé suivantes :
a) lire la première et la deuxième matrice de communication (CM1, CM2),
b) comparer les éléments (E1, E2, E3, E4, E1', E2', E3', E5') des matrices de communication (CM1, CM2) par
i) attribution des éléments respectivement identiques ou correspondants (E1, E2, E3, E1', E2', E3') et
ii) catégorisation des changements des éléments (E1', E2', E3', E5') de la deuxième matrice de communication (CM2) par rapport aux éléments (E1, E2, E3, E4) de la première matrice de communication (CM1),
c) déterminer les données à transformer, les données à transformer étant données par les données de communication (KD) qui peuvent être attribuées à un élément (E3) de la première matrice de communication (CM1) qui correspond à un élément (E3') de la deuxième matrice de communication (CM2), l'élément (E3') de la deuxième matrice de communication (CM2) présentant des changements catégorisés (Kat1.3, Kat2.1, Kat2.2, Kat2.3) par rapport à l'élément correspondant (E3) de la première matrice de communication (CM1),
d) traiter les données de communication (KD) par
i) transformation des données déterminées conformément aux dispositions prescrites pour les changements catégorisés (Kat0, Kat1.1, Kat1.2, Kat1.3, Kat2.1, Kat2.2, Kat2.3),
ii) rejet des données de communication enregistrées (KD) qui doivent être attribuées à un élément (E4) de la première matrice de communication (CM1) pour lequel il n'existe pas d'élément identique ou correspondant dans la deuxième matrice de communication (CM2),
e) envoyer les données enregistrées qui ne doivent être ni rejetées ni transformées et envoyer les données transformées au dispositif de commande à tester (DUT) ou mémoriser les données à envoyer dans un fichier.

2. Procédé selon la revendication 1, l'étape d) du procédé comprenant une étape partielle supplémentaire :
d) iii) simuler, au moyen d'une simulation de bus résiduel (RBS), des messages correspondants pour les éléments (E5') de la deuxième matrice de communication (CM2) pour lesquels il n'existe pas d'élément correspondant dans la première matrice de communication (CM1),
et les données simulées étant envoyées au dispositif de commande à tester (DUT) ou mémorisées dans le fichier.

3. Procédé selon l'une des revendications 1 ou 2, un élément (E1, E2, E3, E4, E1', E2', E3', E5') d'une matrice de communication (CM1, CM2) étant donné par la définition d'une PDU ou d'une trame d'un message, et une première catégorie (Kat1.1, Kat1.2, Kat1.3) étant donnée pour le changement concernant la PDU ou le changement concernant la trame et une deuxième catégorie du changement (Kat2, Kat2.1, Kat2.2, Kat2.3) étant donnée par un changement des données utiles et/ou des signaux dans les données utiles de la PDU ou de la trame.

4. Procédé selon l'une des revendications précédentes, l'identification des éléments correspondants (E3, E3') des matrices de communication (CM1, CM2) s'effectuant par une comparaison des noms et/ou des noms de chemin des éléments (E1, E2, E3, E4) dans la première matrice de communication (CM1) avec les noms et/ou les noms de chemin des éléments (E1', E2', E3', E5') dans la deuxième matrice de communication (CM2) et/ou par une comparaison des ID des éléments (E1, E2, E3, E4, E1', E2', E3', E5') respectifs.

5. Procédé selon l'une des revendications précédentes, les données de communication (KD) enregistrées et à convertir étant extraites d'un flux de données, en particulier les unes après les autres, et les étapes c) à e) étant exécutées pendant le test en cours du dispositif de commande à tester (DUT), le flux de données étant mis à la disposition du système de test (TS) par l'intermédiaire d'une deuxième liaison de communication (KV2) en vue du traitement des données de communication (KD), la deuxième liaison de communication (KV2) étant donnée par une liaison de communication physique ou par une liaison de communication virtuelle.

6. Procédé selon l'une des revendications 2 à 5, la transformation des données de communication (KD), la simulation de bus résiduel (RBS) et la manipulation des messages étant effectuées sur le système de test (TS) au moyen d'au moins une première unité de calcul et d'une unité de mémoire associée.

7. Procédé selon l'une des revendications 1 à 4, au moins les étapes a) à d) ii) étant exécutées avant la réalisation du test et les données de communication enregistrées et transformées étant mémorisées dans le fichier et étant lues depuis le fichier pendant un test du dispositif de commande à tester (DUT).

8. Procédé selon l'une des revendications précédentes, à l'étape c), des données utiles de messages étant déterminées à partir des données de communication (KD) et des signaux dans les données utiles étant comparés aux valeurs par défaut pour les signaux par les éléments (E1', E2', E3', E5') de la deuxième matrice de communication (CM2).

9. Procédé selon la revendication 5, le système de test (TS) comprenant une passerelle (G) avec une fonction de filtre configurable (F) et les messages qui sont envoyés au système de test (TS) via la deuxième liaison de communication (KV2) et qui ne peuvent être attribués à aucun élément (E1', E2', E3', E5') de la deuxième matrice de communication (CM2) étant filtrés au moyen de la passerelle (G).

10. Procédé selon l'une des revendications précédentes, dans le système de test (TS), des valeurs dans les données de communication étant transformées et/ou manipulées avant d'être transmises au dispositif de commande à tester (DUT) via la première liaison de communication (KV1).

11. Procédé selon l'une des revendications précédentes, la deuxième matrice de communication (KM2) étant donnée par une deuxième version (2.0) de la première matrice de communication (KM1).

12. Procédé selon l'une des revendications précédentes, au moins une partie du premier programme pour la transformation des données de communication (KD) étant générée par un deuxième programme pour la génération de code de programme sur la base de la comparaison des matrices de communication (CM1, CM2) et des saisies d'utilisateur sous une forme optimisée.

13. Système de test (TS), le système de test (TS) étant configuré pour mettre en œuvre le procédé selon l'une des revendications 1 à 12.
